Europäisches Patentamt

(19) European Patent Office

Office européen des brevets

(11) Publication number: **0 013 457**
**B1**

(12) **EUROPEAN PATENT SPECIFICATION**

(45) Date of publication of patent specification: **21.09.83**

(51) Int. Cl.³: **F 16 L 47/06, B 29 C 17/02**

(21) Application number: **79200799.9**

(22) Date of filing: **27.12.79**

(54) **A plastics pipe part with socket provided with longitudinally extending passages.**

(30) Priority: **09.01.79 NL 7900172**

(43) Date of publication of application:
**23.07.80 Bulletin 80/15**

(45) Publication of the grant of the patent:
**21.09.83 Bulletin 83/38**

(84) Designated Contracting States:
**AT BE CH DE FR GB IT SE**

(56) References cited:
**DE - A - 2 644 349**
**FR - A - 1 158 007**
**GB - A - 1 093 662**
**GB - A - 1 220 140**

**CHEMICAL ENGINEERING PROGRESS, vol. 57,
No. 10, October 1961, page 65 "Cryogenics"**

(73) Proprietor: **WAVIN B.V.**
**Händellaan 251**
**NL-8031 EM Zwolle (NL)**

(72) Inventor: **Marissen, Roelof Herman**
**4 Schaepmanstraat**
**NL-7691 BZ Bergentheim (NL)**
Inventor: **Beune, Joannes Hendrikus**
**62 Beekberg**
**NL-7772 DR Hardenberg (NL)**

(74) Representative: **Van der Veken, Johannes Adriaan
et al,**
**Willem Witsenplein 3 & 4**
**NL-2509 LP The Hague (NL)**

Courier Press, Leamington Spa, England

# A plastics pipe part with socket provided with longitudinally extending passages.

The invention relates to a plastics pipe part with a socket, the wall being provided with longitudinally extending passages.

Such a plastics pipe part with a socket is known from DE—A—2644349. In said known pipe part with a socket the longitudinal passages in the wall of said pipe part only extend until the transition between said pipe part and said socket. A result hereof is that on using pipe parts the wall of which comprises longitudinally extending passages, the walls of said passages have to be pressed onto each other over the entire length of the socket, so that a socket wall part without longitudinally extending passages is produced. The result of this is that considerable problems will occur in practice. Though walls may be pressed onto each other over the length of the socket the properties of strength of the material of the socket so obtained are often insufficient.

Moreover welding or heatsealing a socket to a pipe part, the wall of which comprises longitudinally extending passages, will also cause problems, since the ends of the longitudinally extending passages of the pipe part have to be sealed off by disposing an end sealing wall, which wall serves at the same time as a connection with the socket to be formed.

The present invention aims to provide a plastics pipe part with socket, the wall of said pipe part being provided with longitudinally extending passages, which is characterized in that said passages extend continuously or discontinuously in the wall of the socket over at least a part of the length of the socket.

Such a plastics pipe part with socket offers the advantage that the strength properties of said socket are substantially equal to the strength properties of the pipe part, which facilitates processing of the pipe parts and the formation of sockets to said pipe parts.

It is already known from FR—A—1158007 to provide a double walled plastics pipe with an integral double walled socket but the annular space between the two walls is filled with glass in order to obtain a sufficient strength.

The socket according to the invention advantageously comprises an annular groove chamber for receiving a sealing member part so that the socket can be used immediately for coupling with a male pipe part.

The inner diameter of the groove chamber being located at distance from the socket end, may be substantially equal to the outer diameter of said socket, thus closing the longitudinally extending passages at the location of said groove, while the strength properties of said socket are then only slightly changed.

In a very appropriate embodiment of the present invention the pipe part with socket is provided with an annular end groove chamber formed by a cooperation of a retaining ring and the socket. The latter embodiment is very convenient in that no separate annular groove chamber for accommodating a part of a sealing member need be formed inside the socket which is a rather difficult technical process. Said groove chamber can now be formed in the socket without deforming the interior of the socket.

A sealing member part disposed between the inner side of the retaining ring and the front side of the socket now provides a resilient fixing of an axially movable retaining ring. When the bottom of the assembly is subjected to a high impact an axial movement of said retaining ring can thus be realized, and after removal of the impact the retaining ring will return to its original position. As described hereinbefore, the latter movements are due to the resilient action of the flexible material of the sealing member part, being held between the front side of the socket and the inside of the retaining ring.

Said retaining ring may be coupled with the socket by means of a snap-connection by means of an annular projection at the inside of the substantially J-shaped retaining ring and an outer annular recess at the outside of the socket, obtained by pressing the walls of the passages together at the location of said outer annular recess. In this manner the passages are sealed off by pressing them together and also an additional seal is formed at the front end of the socket, viz. the front side of the passages, by accommodating sealing member part at said front side of the socket; the latter provision ensures an absolute closure of said passages.

It is noted that GB—A—1220140 discloses a double walled metal flue pipe with an outer groove obtained by pressing the outer wall onto the inner wall of the double walled pipe.

Even if the passages at the other end of the pipe part would be open, sewage water from the pipes will never be able to reach the front ends of the passages in the socket end, so that a flow of undesired liquids from passages into a pipe line consisting of a pipe part with a socket and a male pipe part, is absolutely impossible.

In order to permit an axial displacement of the retaining ring, the annular recess at the outside of the socket and the annular projection upon the retaining ring have a cross-sectional V-shaped or a rectangular, trapezoidal, or a waveshape, a clearance existing at least between the two wall parts of the recess facing each other and the projection, thus allowing a yielding of plastics material. The advantages of an embodiment of this type are important. The retaining ring or the socket cannot be damaged if the pipe part with socket and the retaining ring fixed to the socket will hit the bottom vigorously. Due to the axial movement of the retaining ring which is absorbed by the flexible material of the sealing member part dis-

**0013457**

posed in the annular groove chamber, bound by the front side of the socket end and the inside of the retaining ring, damage to the retaining ring and socket owing to a vigorous impact is absolutely excluded.

The retaining ring may also be fixed by an adhesive or by casting, in which latter case said retaining ring does not possess a relative axial movement with respect to the socket.

According to a very advantageous embodiment a pipe part with a socket, the wall of which comprising longitudinally extending passages which will extend continuously or discontinuously in the wall of the socket over the length of said socket, the front ends of the passages being sealed off, said seal consisting of a flexible end part of the sealing means cooperating sealingly with the front side of the socket thereby sealing the longitudinally extending passages or consisting of a wall being integral with the socket and forming an end seal. The wall forming an end seal may appropriately extend between the free end of the socket and the annular outer recess at the outside of said socket when a retaining ring is used cooperating with an outer annular recess in the wall of the socket, by means of a snap-connection.

The present invention will now be illustrated with respect to an embodiment in the drawing, wherein

Figure 1 shows a pipe part with socket in accordance with the invention, comprising an annular groove;

Figure 1a a cross section of a pipe part with socket according to Figure 1;

Figure 2 is a longitudinal section of a pipe part with socket and an annular end groove chamber with a retaining ring and sealing member;

Figure 3 shows a detail of a pipe part with socket as shown in Figure 2;

Figure 4 shows a variant of a pipe part with socket and an annular end groove chamber according to Figure 2;

Figure 5 shows a modified embodiment of a pipe part with socket comprising an annular end groove chamber;

Figure 6 shows another embodiment of a pipe part with socket and an annular end groove chamber;

Figure 7 shows a pipe part with a socket comprising an annular end groove chamber with an adhering retaining ring;

Figure 8 shows another pipe part with socket comprising an annular end groove chamber and a sealing or pressing ring;

Figure 9 shows a pipe part with a socket comprising a resilient end sealing member sealing off the front ends of the passages;

Figure 9a shows a further embodiment of a pipe part in accordance with the invention;

Figure 10 shows a further embodiment and Figure 11 also shows another embodiment.

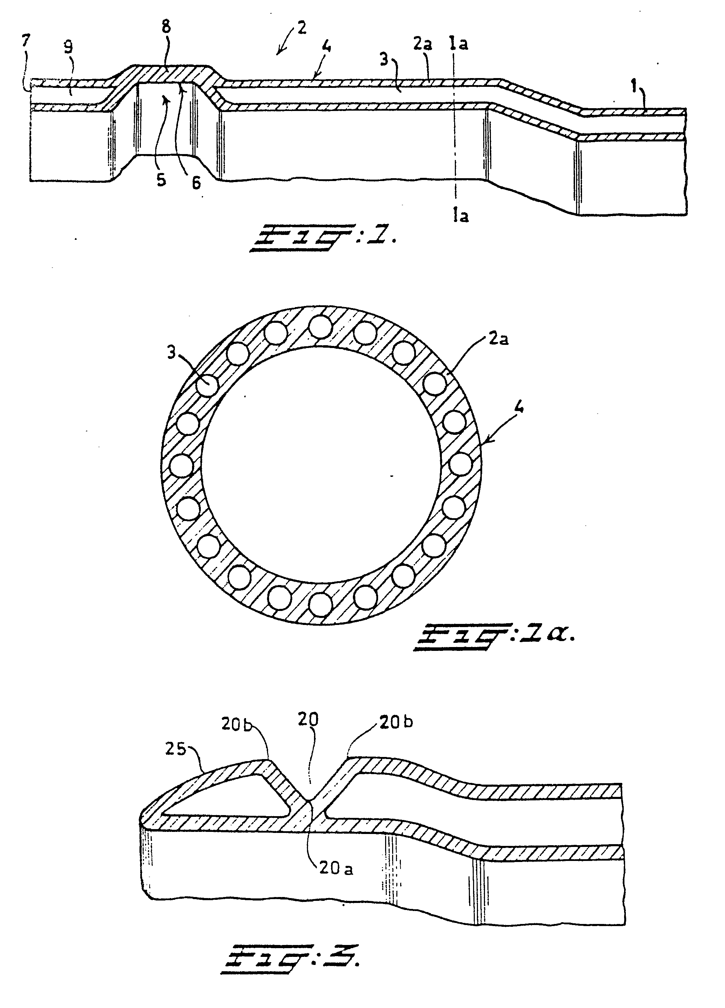

Figure 1 shows a pipe part 1 with a socket 2.

The wall 4 of the pipe part and socket is provided with longitudinally extending passages 3. Said longitudinally extending passages 3 have a rounded cross-section and preferably an elliptical or round shape. Said extending passages 3 continue in the socket 2 and end in the free ends 7.

An annular groove chamber 5 is disposed at distance from the front end 7 of the socket 2 in order to receive a sealing member between said socket 2 of a pipe part 1 and the projecting pipe part. Said groove chamber 5 is obtained by pressing down the walls of the passages 3. This pressing may be thus performed that the inner diameter 6 of an annular groove chamber 5 substantially corresponds to the outer diameter of the outer wall 2a of the socket. Consequently only a slight elevation 8 is obtained upon the outer side of socket 2.

In the abovedescribed manner the advantage is obtained that no connection will exist between the inner side and the outer side of the pipe, even when leakages occur from the inside of said pipe towards the passages.

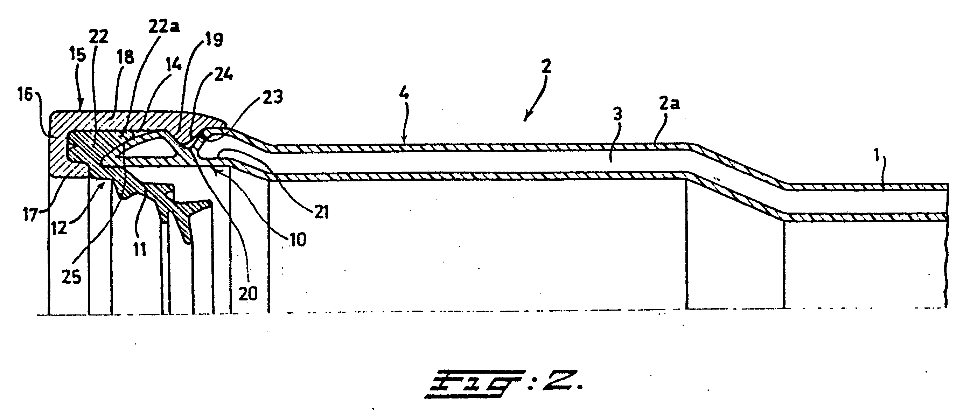

Figure 2 shows a very convenient embodiment of the present invention, to wit a pipe part 1 with longitudinally extending passages 3 with an adjoining socket 2. Said socket 2 is provided with an end widening 10 for the receipt of a sealing sleeve 11 of a sealing member 12 provided with a front member 22 being present within an annular end groove 14 of said pipe part. Said annular end groove chamber 14 is formed by means of a retaining ring 15 connected with socket 2 and being fixed on the outer side of said socket 2. Said retaining ring 15 has at least a longitudinal J-shape thus providing said retaining member on the one hand with a bottom 16, a short leg part 17 and a long leg part 18. Said long leg part 18 is provided with an annular inwardly directed thickening 19, cooperating snappingly with an annular recess 20 upon the outside of the socket 2. At the location of said annular recess 20 the outer wall 2a of the socket 2 rests against the inner side 21 of the channels 3, so that a very good seal is obtained between the front side of the socket and the inner side of the passages.

A sealing member part 22 being integral with the sealing sleeve 11 of the sealing member 12, is disposed within the annular end groove chamber 14.

The cross section of the recess 20 and the inwardly directed projection 19 of the leg 18 of the retaining ring 15 is wave-shaped, rectangular, or trapezoidal. In order to facilitate an axial displacement of the retaining ring with respect to the socket, said embodiment has such a shape that a wall part 23 of the recess 20 and a wall part 24 of the inwardly directed projection 19 are kept at distance from one another with clearance, so that the plastics material is able to yield if the sealing ring is subjected to an axial impact which may occur when the pipe part with the socket, the retaining ring fixed upon the socket and the sealing member 12, hit the bottom vigorously, especially when similar pipe parts are unloaded from vans.

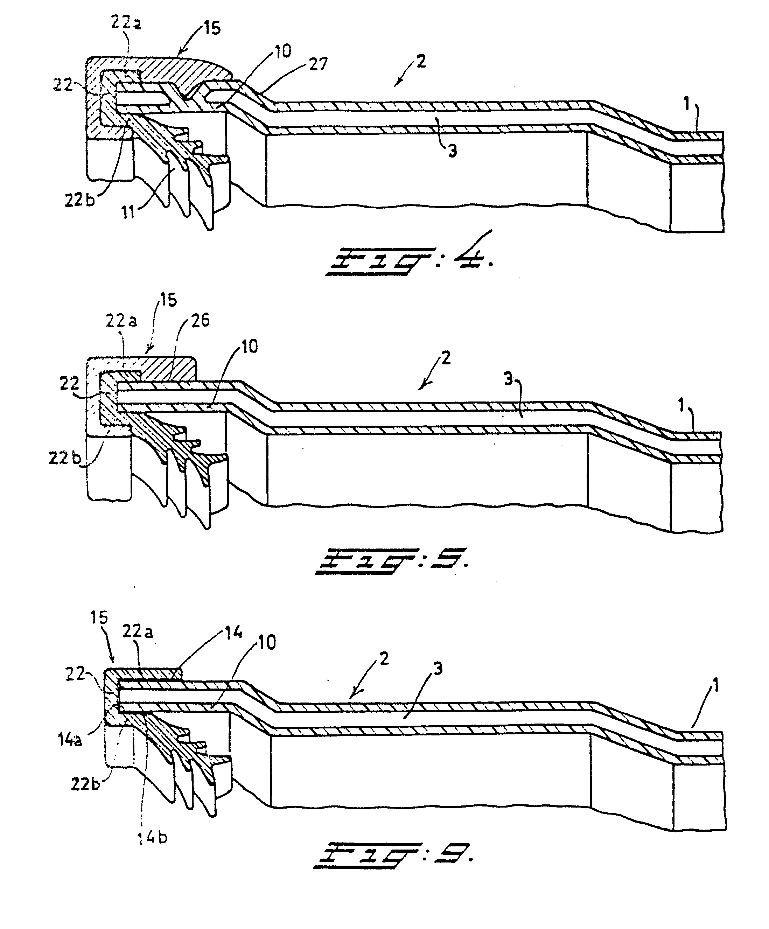

An appropriate retaining of the sealing member part 22 is obtained by providing said sealing member part 22 with an inwardly directed part 22a extending in the space formed between the inner side of leg 18 of the retaining ring 15 and a chamfer 25 obtained by the end sealing wall of the passages. An easy and rapid mounting of the retaining ring is obtained by giving said end sealing wall part 25 forming the chamfer, a rounded shape. This holds also for the the transition 20b of the recess 20 (Fig. 3). The bottom 20a of said recess 20 will have an optimum strength by also giving same a rounded shape.

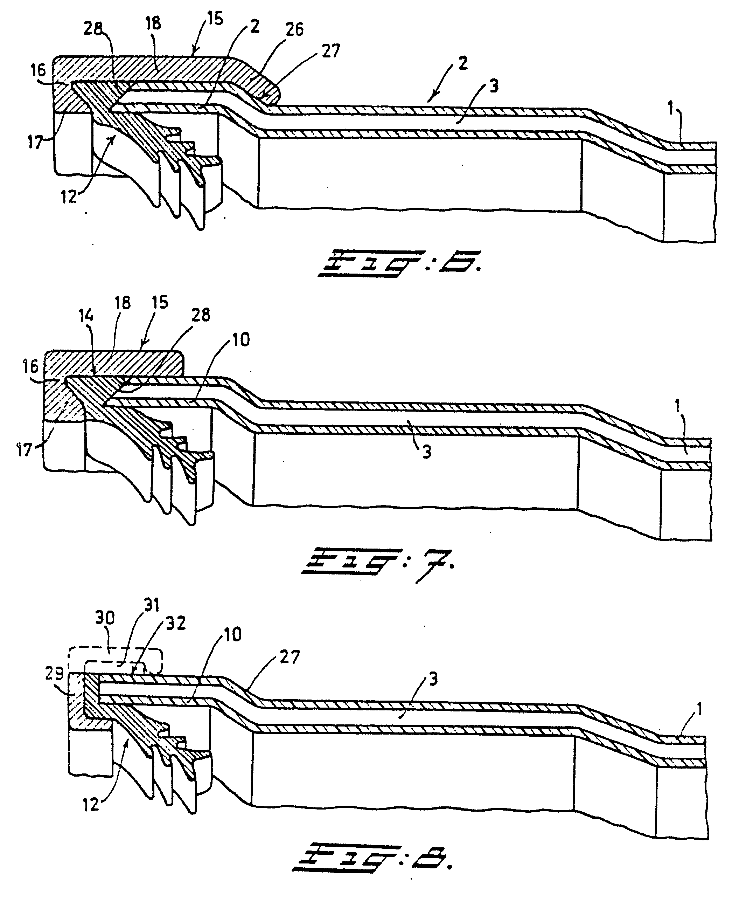

Figure 4 shows a further embodiment of the sealing member 12, in this case being provided with a sealing member part 22 which extends on the one hand with part 22a across the outer side of the socket 2 and on the other hand with part 22b across the inside of said socket 2. The latter embodiment also comprises a connection between the sealing member part 22 and the sealing sleeve 11. The retaining ring used in this embodiment, generally consisting of a material being more impact-resistant than the material of the socket, may consist of a cast polyurethane or for example a polypropylene or a polyethylene retaining ring. The sealing ring 15 consists advantageously of a polyethylene or polypropylene material.

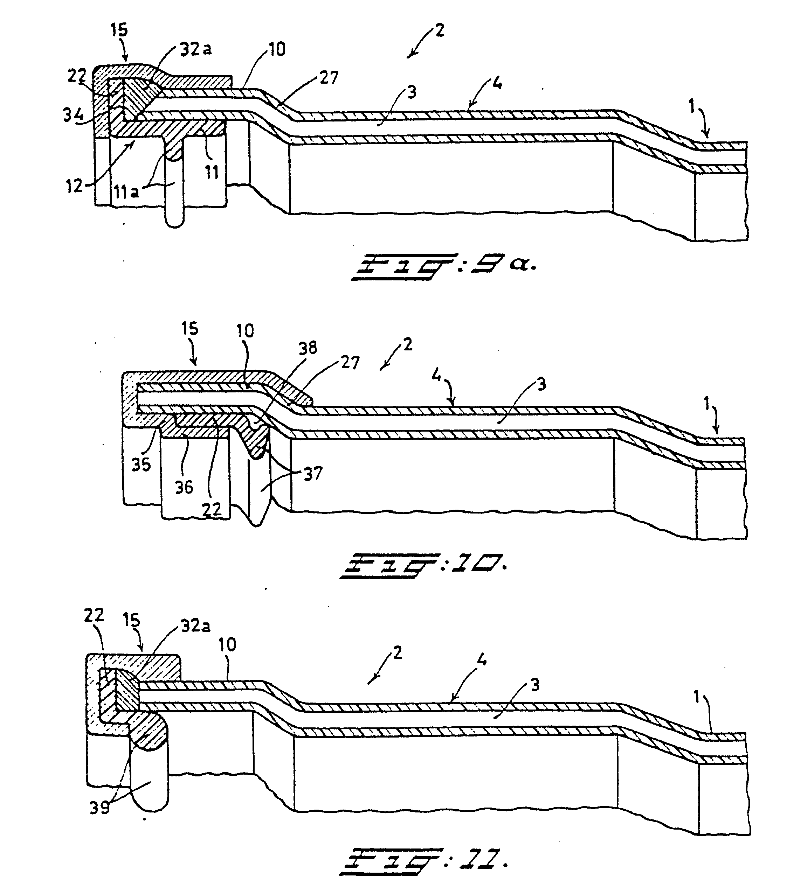

Figure 5 also shows an embodiment according to the present invention, the retaining ring 15 in this embodiment now being fixed to the outer side of the socket 2, by means of an adhesive connection 26. In this embodiment the sealing member part 22 is also provided with parts 22 and 22b extending across the outside and the inside of the socket in the vicinity of its front end.

In Figure 6 an embodiment is shown in which the retaining ring 15 is retained by means of an inwardly directed retaining ring end edge 26 which clampingly engages the transition 27 between the end widening 10 and the socket 2.

In this embodiment the retaining ring 15 also comprises a long leg part 18, a bottom part 16 and a short leg part 17. The inner diameter of the retaining ring equals the inner diameter of the end part 10 of the socket 2, but this is not essential since the inner diameter mostly equals the inner diameter of the socket itself, in order to facilitate the centering operation.

In Figure 7 the retaining ring 15 is fixed to the outer side of the socket 2, said retaining ring being provided with a bottom part 16, a short leg part 17 and a long leg part 18. The inner diameter of the leg 17 now equals the inner diameter of the socket 2.

So as to effect a proper retaining of the sealing member, the front end 28 of the socket 2 is chamfered, the sealing member part being disposed within the annular end groove chamber 14, being adapted to said chamfer 28.

Figure 8 shows a further embodiment wherein the sealing member 12 is retained by means of a ring 29.

Said ring 29 is pressed into the sealing member 12, which was previously disposed upon the socket end, which pressing operation results in a tight fixing of said sealing member 12. If desired, a part 31 of the sealing member 12 may be fixed by means of an adhesive 32. Said ring 29 may get engaged across part 31 by means of an annular part 30.

Figure 9 shows a further embodiment wherein the sealing member 12 comprises a main part which seals off the front side of the socket and thus the passages 3 in said socket. Said sealing member 12 also comprises a part 22a, which extends across the outer side of the socket over a certain distance thereof and a part 22b which extends across the inner side of said socket.

Said sealing member 12 is hereby fixed to the front side of the socket by an adhesive, e.g. a plastics glue, and thus seals off the passages. It is obvious that the latter embodiment does not require a particular retaining ring, as the adherence by means of the glue layer 14, 14a and 14b ensures an optimum fixing of the sealing member 12 to the socket 2.

The aforedescribed pipe part 1 with a socket 2 consists of a thermoplastics material, like for instance polyvinylchloride, the retaining ring 15 advantageously consisting of a material having a higher yield and an impact resistance, exceeding those of polyvinylchloride, so in particular a polyolefin material, such as a polyethylene or a polypropylene.

The material of the sealing member advantageously consists of an elastomer.

Instead of a polyethylene retaining ring 15, a retaining ring consisting of polyurethane may also be used, the latter being moulded. The latter excludes an axial movement between the retaining ring and the socket.

Figure 9a shows an embodiment in which the retaining ring 15 is retained by shrinkage over a collar-shaped part 32a, obtained by pressing the walls at the end of a pipe, while forming an end wall 34. The sealing member 12 comprises a projection 11a.

Figure 10 shows an embodiment in which the retaining ring 15 is retained by transition 27 between the widening 10 and socket 2. Said retaining ring comprises, however, an inwardly staggered ring part 35 and a rather long leg 36, which extends in the vicinity of the aforementioned transition 27. The sealing member comprises a head 22 and a sealing part 37 being formed thus that an annular chamber 38 is produced which may easily absorb any tolerances of pipe parts.

Figure 11 shows an embodiment in which the sealing member comprises a head 22 being retained by retaining ring 15 which cooperates with collar 32a. The seal is effected by ring part 39.

## Claims

1. A plastics pipe part (1) with a socket (2) the wall of said pipe part being provided with longitudinally extending passages (3), characterized in that said passages (3) extend continuously or discontinuously in the wall of the socket over at least a part of the length of the socket (2).

2. A pipe part according to claim 1, characterized in that socket (2) is provided with an annular groove chamber (5) for receiving a sealing member part.

3. A pipe part according to claim 1 or 2, characterized in that the socket (2) is provided with an annular groove chamber (5) located at distance from the socket end (7) and obtained by radially pressing the walls of the passages, preferably sealingly, onto each other over a certain distance.

4. A pipe part according to claim 3, characterized in that the inner diameter (6) of the groove chamber (5) is substantially equal to the outer diameter (2a) of the socket (2).

5. A pipe part according to claim 1, characterized in that the pipe part is provided with an annular end groove chamber (14) formed by cooperation of a retaining ring (15) and the socket (2).

6. A pipe part according to claim 5, characterised in that the cross-section of the retaining ring (15) is substantially J-shaped.

7. A pipe part according to claim 1, characterized in that at least one of the following measures has been applied:
a) a retaining ring (15) engages the socket (2) by means of a snap-connection (19, 20).
b) a retaining ring (15) cooperates snappingly with the transition (27) between the socket and end widening (10) of the socket.
c) a retaining ring (15) is provided with at least an inwardly projecting part (19) which snappingly engages a recess (20) at the outside of the socket (2).
d) a retaining ring (15) engages the socket (2) by means of a projection (19) located in a recess (20), said projection (19) and the recess (20) extending annularly.
e) an outer recess (20) formed in the socket (2) has been obtained by pressing the passage walls onto each other while maintaining the inner diameter of the socket (2).
f) a retaining ring (15) engaging the socket (2) is axially movable.
g) the socket (2) is provided with an outer annular recess (20) engaging an annular projection of a retaining ring (15) and said recess (20) and said projection (19) have a V-shaped, wave-shaped, rectangular or trapezoidal cross-section.
h) the socket (2) is provided with an outer annular recess (20) engaging an annular projection (19) of a retaining ring (15) and at least two opposite wall parts (24 and 23) of the recess (20) and the projection (19) comprise a clearance allowing a yield of plastics material.

8. A pipe part according to claim 5—7, characterized in that the retaining ring (15) is fixedly secured onto the socket, preferably by casting or an adhesive.

9. A pipe part according to any of claims 1—8, characterized in that at least one of the following measures has been applied:
a) the socket is provided with an end widening (10) for receiving a sealing member part (22) to be received in said groove chamber (5);
b) the socket engages a retaining ring (15) having an inner diameter being equal to or greater than the inner diameter of the socket (2);
c) the front end of the longitudinally extending passages (3) is sealed off;
d) the front end of the socket wall is sealed off by a wall (25) providing an end chamfer;
e) a socket wall (25) providing the end chamfer extends between the free end of the socket and an annular recess (20) situated at the outer side of the socket;
f) the front ends of the longitudinally extending passages (3) are sealed off by a flexible end sealing part (22) and said end sealing part may be integral with a sealing sleeve (11);
g) the end sealing part (22) is fixed to the socket by means of an adhesive;
h) an end sealing part (22a) extends across the outer side of the socket;
i) an end sealing part (22b) extends across the inner side of the socket;
j) the end (28) of the socket is chamfered;
k) said pipe part consists of a thermoplastics, preferably of a polyvinylchloride;
l) a retaining ring (15) engaging the socket consists of a material having yield properties and impact resistance exceeding that of the plastics material of the pipe part, said material preferably being a polyolefin, and more preferably polyethylene of polypropylene.

## Revendications

1. Elément de tuyau en matière plastique (1) comportant une partie femelle (2), la paroi dudit élément de tuyau présentant des passages (3) s'étendant longitudinalement, caractérisé en ce que lesdits passages (3) s'étendent de façon continue ou discontinue dans la paroi de la partie femelle sur au moins une partie de la longueur de la partie femelle.

2. Elément de tuyau selon la revendication 1, caractérisé en ce que la partie femelle (2) est pourvue d'une chambre en forme de rainure annulaire (5) apte à recevoir un élément d'étanchéité.

3. Elément de tuyau selon la revendication 1 ou 2, caractérisé en ce que la partie femelle (2) est pourvue d'une chambre en forme de rainure annulaire (5) située à une certaine distance de l'extrémité (7) de la partie femelle et obtenue en pressant radialement les parois des passages, de préférence, de manière étanche, l'une contre l'autre sur une certaine distance.

4. Elément de tuyau selon la revendication 3, caractérisé en ce que le diamètre intérieur (6) de la chambre en forme de rainure (5) est sensiblement égal au diamètre extérieur (2a) de la partie femelle (2).

5. Elément de tuyau selon la revendication 1, caractérisé en ce que l'élément de tuyau est pourvu d'une chambre d'extrémité en forme de rainure annulaire (14) formée par la coopération d'une bague d'arrêt (15) et de la partie femelle (2).

6. Elément de tuyau selon la revendication 5, caractérisé en ce que la section transversale de la bague d'arrêt (15) a sensiblement une forme en J.

7. Elément de tuyau selon la revendication 1, caractérisé en ce que l'une au moins des dispositions suivantes est appliquée:

a) une bague d'arrêt (15) s'applique sur la partie femelle (2) grâce à une liaison par encliquetage (19, 20).

b) une bague d'arrêt coopère par encliquetage avec la zone de transition (27) entre la partie femelle et une extrémité élargie (10) de la partie femelle.

c) une bague d'arrêt (15) est pourvue d'au moins une partie (19) faisant saillie vers l'intérieur et s'engageant élastiquement dans un renfoncement (20) situé à l'extérieur de la partie femelle (2).

d) une bague d'arrêt (15) s'applique sur la partie femelle (2) au moyen d'une saillie (19) logée dans un renfoncement (20), ladite saillie (19) et le renfoncement (20) s'étendant sous une forme annulaire.

e) un renfoncement extérieur (20), formé dans la partie femelle (2) est obtenu en pressant les parois du passage l'une contre l'autre, tout en conservant le diamètre intérieur de la partie femelle (2).

f) une bague d'arrêt (15) s'appliquant sur la partie femelle (2) est déplaçable axialement.

g) la partie femelle (2) est pourvue d'un renfoncement annulaire extérieur (20) dans lequel s'engage une saillie annulaire d'une bague d'arrêt (15) et ledit renfoncement (20) et ladite saillie (19) ont une section transversale présentant une forme en V, une forme ondulée, rectangulaire ou trapézoïdale.

h) la partie femelle (2) est pourvue d'un renfoncement annulaire extérieur (20) dans lequel s'engage une saillie annulaire (19) d'une bague d'arrêt (15) et, au moins entre deux parties de paroi opposées (24 et 23) du renfoncement (20) et de la saillie (19), un intervalle est ménagé afin de permettre une déformation élastique de la matière plastique.

8. Elément de tuyau selon les revendications 5—7, caractérisé en ce que la bague d'arrêt (15) est fixée rigidement sur la partie femelle, de préférence, au moulage ou par un adhésif.

9. Elément du tuyau selon l'une quelconque des revendications 1 à 8, caractérisé en ce que l'une au moins des dispositions suivantes est appliquée:

a) la partie femelle est pourvue d'une extrémité élargie (10), apte à recevoir une partie (22) d'un élément d'étanchéité devant être logé dans ladite chambre en forme de rainure (5);

b) la partie femelle est en contact avec une bague d'arrêt (15) ayant un diamètre intérieur égal à ou supérieur au diamètre intérieur de la partie femelle (2);

c) l'extrémité frontale des passages s'étendant longitudinalement (3) est obturée;

d) l'extrémité frontale de la paroi de la partie femelle est obturée par une paroi (25) formant un chanfrein d'extrémité;

e) une paroi (25) de la partie femelle constituant le chanfrein d'extrémité, s'étend entre l'extrémité libre de la partie femelle et un renfoncement annulaire (20) situé sur la face extérieure de la partie femelle;

f) les extrémités frontales des passages s'étendant longitudinalement (3) sont obturées par un élément d'étanchéité flexible d'extrémité (22) et ledit élément d'étanchéité d'extrémité peut faire partie intégrante d'un manchon d'étanchéité (11);

g) l'élément d'étanchéité d'extrémité (22) est fixé à la partie femelle au moyen d'un adhésif;

h) une partie d'étanchéité d'extrémité (22a) s'étend le long de la face extérieure de la partie femelle;

i) une partie d'étanchéité d'extrémité (22b) s'étend le long de la face intérieure de la partie femelle;

j) l'extrémité (28) de la partie femelle est chanfreinée;

k) ledit élément du tuyau est constitué par une matière thermoplastique, de préférence, par du chlorure de polyvinyle;

l) une bague d'arrêt (15) s'appliquant sur la partie femelle est constituée par une matière ayant des propriétés d'élasticité et de résistance aux chocs supérieures à celles de la matière plastique constituant l'élément de tuyau, ladite matière étant, de préférence, une polyoléfine et, mieux encore, du polyéthylène ou du polypropylene.

**Patentansprüche**

1. Kunststoff-Muffenrohrteil (1) mit einer Muffe (2), wobei die Wandung des Rohrteils mit Längskanälen versehen ist, dadurch gekennzeichnet, daß sich die Längskanäle (3) durchgehend oder unterbrochen in der Wandung der Muffe (2) zumindest über einen Teil der Muffenlänge erstrecken.

2. Rohrteil nach Anspruch 1, dadurch gekennzeichnet, daß die Muffe (2) mit einer ringförmigen Nutkammer (5) zum Aufnehmen eines Dichtungsglieds versehen ist.

3. Rohrteil nach Anspruch 1 oder 2, dadurch gekennzeichnet, daß die Muffe (2) mit einer ringförmigen Nutkammer (5) versehen ist, die im Abstand von Muffenende (7) angeordnet und durch radiales, vorzugsweise abdichtendes, Zusammendrücken der Kanalwände über eine gewisse Strecke gebildet ist.

4. Rohrteil nach Anspruch 3, dadurch gekennzeichnet, daß der Innendurchmesser (6) der Nutkammer (5) im wesentlichen gleich dem Außendurchmesser (2a) der Muffe (2) ist.

5. Rohrteil nach Anspruch 1, dadurch gekennzeichnet, daß es mit einer endseitgen Ringnutkammer (14) versehen ist, die gemeinsam von einem Haltering (15) und der Muffe (2) gebildet ist.

6. Rohrteils nach Anspruch 5, dadurch gekennzeichnet, daß der Querschnitt der Halterings (15) im wesentlichen J-förmig ist.

7. Rohrteil nach Anspruch 1, gekennzeichnet durch zumindest eines der folgenden Merkmale:

a) ein Haltering (15) ist mittels einer Schnappverbindung (19, 20) mit der Muffe (2) in Eingriff gehalten,

b) ein Haltering (15) steht mit dem Übergangsbereich (27) zwischen der Muffe und einer Endaufweitung (10) der Muffe (2) nach Art eines Schnappringes (26) in Eingriff,

c) ein Haltering (15) ist mit zumindest einem nach innen vorragenden Teil (19) versehen, der mit einer Vertiefung (20) an der Außenseite der Muffe (2) in Schnappeingriff steht,

d) ein Haltering (15) steht mittels eines in einer Vertiefung (20) angeordneten Vorsprungs (19) mit der Muffe (2) in Eingriff, wobei der Vorsprung (19) und die Vertiefung (20) ringförmig verlaufen,

e) eine äußere Vertiefung (20) in der Muffe (2) ist durch Aufeinanderpressen der Kanalwände unter Beibehaltung des Innendurchmessers der Muffe (2) gebildet,

f) ein mit der Muffe (2) in Eingriff stehender Haltering (15) ist in axialer Richtung bewegbar,

g) die Muffe (2) ist mit einer ringförmigen Vertiefung (20) versehen, die mit einem ringförmigen Vorsprung (19) eines Halterings (15) in Eingriff steht, und die Vertiefung (20) und der Vorsprung (19) besitzen einen V-förmigen, wellenförmigen, rechteckigen oder trapezförmigen Querschnitt,

h) die Muffe (2) ist mit einer ringförmigen Vertiefung (20) versehen, die mit einem ringförmigen Vorsprung (19) eines Halterings (15) in Eingriff steht, und zumindest zwischen zwei gegenüberliegenden Wandbereichen der Vertiefung (20) und dem Vorsprung (19) ist für ein Nachgeben des Kunststoffmaterials Spiel vorhanden.

8. Rohrteil nach den Asprüchen 5 bis 7, dadurch gekennzeichnet, daß der Haltering (15) auf der Muffe (2), vorzugsweise durch Gießen oder mittels eines Klebstoffes, fest angebracht ist.

9. Rohrteil nach einem der Ansprüche 1 bis 8, gekennzeichnet durch zumindest eines der folgenden Merkmale:

a) die Muffe (2) ist mit einer Endaufweitung (10) zur Aufnahme eines von der Nutkammer (5) aufzunehmenden Dichtungsteils (22) versehen,

b) die Muffe steht mit einem Haltering (15) in Eingriff, dessen Innendurchmesser gleich dem oder größer als der Innendurchmesser der Muffe (2) ist,

c) das Vorderende der Längskanäle (3) ist abgeschlossen,

d) das Vorderende der Muffenwand ist durch eine eine Endabschrägung bildende Wand (25) abgeschlossen,

e) eine die Endabschrägung bildende Wand (25) erstreckt sich zwischen dem freien Ende der Muffe und einer an der Außenseite der Muffe angeordneten Ringförmigen Vertiefung (20),

f) die Vorderenden der Längskanäle (3) sind durch einen flexiblen Dichtungsendteil (22) abgeschlossen, der mit einer Dichtungsmanschette (11) aus einem Stück bestehen kann,

g) der Dichtungsendteil (22) ist mittels Klebstoff an der Muffe befestigt,

h) ein Dichtungsendteil (22a) erstreckt sich über die Außenseite der Muffe,

i) ein Dichtungsendteil (22b) erstreckt sich über die Innenseite der Muffe,

j) das Ende (28) der Muffe ist abgeschrägt,

k) das Rohrteil (1) besteht aus thermoplastischen Kunststoff, vorzugsweise aus einem Polyvinylchlorid,

l) ein mit der Muffe in Eingriff stehender Haltering (15) besteht aus einem Material mit einer Fließfähigkeit und Schlagfestigkeit, die diejenigen des Kunststoffs des Rohrteils übersteigen, vorzugsweise aus einem Polyolefin, insbesondere Polyäthylen oder Polypropylen.

**Fig.1.**

**Fig.1a.**

**Fig.3.**

_Fig:2._

_Fig: 4._

_Fig: 5._

_Fig: 9._

*Fig: 6.*

*Fig: 7.*

*Fig: 8.*

Fig. 9a.

Fig. 10.

Fig. 11.